# EUROPEAN PATENT APPLICATION

(11) **EP 2 511 860 A1**
(43) Date of publication of application: **17.10.2012**
(21) Application number: 11162063.9
(22) Date of filing: 12.04.2011
(51) Int. Cl.: G06Q 10/00

(54) **Methods for establishing and cancelling a construction site area in a central registration system for a traffic infrastructure network, in particular a rail-based traffic infrastructure network**

(71) Applicant: Thales Deutschland GmbH, 70435 Stuttgart (DE)
(72) Inventor: Häckel, Thomas, 70499 Stuttgart (DE)
(74) Representative: Kohler Schmid Möbus

(57) **Abstract**

A method for establishing a construction site area (CSA; CSA1, CSA2) in a central registration system (21) for a traffic infrastructure network (10), wherein a supervisor (SV) establishes (106) the construction site area within the central registration system (21) after a safeguard assistant (SGA) has requested (103) or consented to (108) establishing the construction site area, is characterized in that the central registration system (21) allows the establishing (106) of the construction site area only if the safeguard assistant was, at the point of time of notifying his request (103) or consent (108), within a defined close-up area (CUA; CUA1, CUA2) about the corresponding construction site (CS1, CS2) according to a location analysis.

Further, a method for cancelling a construction site area (CSA; CSA1, CSA2) in a central registration system (21) for a traffic infrastructure network (10), wherein a supervisor (SV) cancels (102) the construction site area within the central registration system (21) after all safeguard assistants (SGA) allocated to the corresponding construction site (CS1, CS2) have requested (110) or consented to (114) cancelling the construction site area, wherein at least one safeguard assistant (SGA) is allocated to said construction site, is characterized in that the central registration system (21) allows the cancelling (102) of the construction site area only if at least one of the safeguard assistants allocated to the construction site was, at the point of time of notifying his request (110) or consent (114), within a defined close-up area (CUA; CUA1, CUA2) about the respective construction site according to a location analysis.

The inventive methods make the establishing and cancelling of construction site areas safer.

## Description

### Background of the invention

The invention relates to a method for establishing a construction site area in a central registration system for a traffic infrastructure network, in particular for a rail-bound traffic infrastructure network, wherein a supervisor establishes the construction site area within the central registration system after a safeguard assistant has requested or consented to establishing the construction site area.

The invention also relates to a method for cancelling a construction site area in a central registration system for a traffic infrastructure network, in particular for a rail-bound traffic infrastructure network, wherein a supervisor cancels the construction site area within the central registration system after all safeguard assistants allocated to the corresponding construction site have requested or consented to cancelling the construction site area, wherein at least one safeguard assistant is allocated to said construction site.

In rail-bound traffic infrastructure networks, the traffic is typically organized by means of a central registration system which contains information about the active railway vehicles and the available tracks. Advanced central registration systems such as ETCS level 2 may automatically coordinate the traffic, i.e. give or deny permissions to use specific track sections to railway vehicles without human interaction. Auxiliary type central registration systems, in contrast, help a supervisor who coordinates the traffic manually, in particular by displaying information about the active railway vehicles and the available tracks. Auxiliary systems are particularly useful if an advanced central registration system is out of function, e.g. when construction work has to be done at the security equipment.

When construction work has to be done at the tracks, there is, generally, a danger that railway vehicles collide with construction workers (or their tools and materials).

It is known to protect construction workers with flagmen. The construction workers may focus on the construction work at the tracks, and the flagmen will warn the construction workers in case of traffic (typically a train) approaching; the construction workers may then retreat from the tracks in time. It is also known to initiate warning messages in case of traffic approaching automatically by means of rail contacts.

In ship traffic, the AIS protocol allows the exchange of GPS navigation data, compare
http://de.wikipedia.org/wiki/Automatic_Identification_System,
and in non-professional aviation there is the FLARM collision warning system, compare
http://de.wikipedia.org/wiki/FLARM,
which allow the exchange of position information and thus to identify collision danger in time.

However, some construction work may require to block regular traffic temporarily at a construction site in order to guarantee the safety of the construction workers and the regular traffic, e.g. if heavy construction tools cannot be retreated from the tracks at short notice.

For this purpose, central registration systems (both advanced and of auxiliary type) allow the establishing of "construction site areas". An established construction site area denies - or reminds a supervisor to deny - the permission to use all tracks in the construction site area to the regular (i.e. non-construction) traffic. After the construction work has been completed, the construction site area may be cancelled within the central registration system again.

When the construction workers are ready to begin their work at a construction site, a safeguard assistant at the construction site contacts a supervisor at the central registration system (for example by telephone or radio) and asks for establishing the construction site area. As soon as the supervisor has done the establishing, the safeguard assistant receives a confirmation, and the construction work may begin. Later, when the construction work is completed, the safeguard assistant contacts the supervisor again and asks for cancelling the construction site area. The supervisor then typically confirms the cancelling request and cancels the construction site area at the central registration system.

However, these processes bear the risk that the supervisor establishes or cancels a wrong construction site area in his central registration system. This is particularly true if the supervisor has to administrate several construction sites or construction site areas, respectively, or if the supervisor is under pressure for various reasons. If a wrong construction site area is established, the workers at the construction site for which the establishing was actually requested are endangered by regular traffic. If a wrong construction site area is cancelled, then workers active at this construction site are endangered by regular traffic.

### Object of the invention

It is the object of the invention to make the establishing and cancelling of construction site areas safer.

### Short description of the invention

This object is achieved, in accordance with the invention, by a method for establishing a construction site area in a central registration system for a traffic infrastructure network, in particular for a rail-bound traffic infrastructure network, wherein a supervisor establishes the construction site area within the central registration system after a safeguard assistant has requested or consented to establishing the construction site area,
characterized in
that the central registration system allows the establishing of the construction site area only if the safeguard assistant was, at the point of time of notifying his request or consent, within a defined close-up area about the corresponding construction site according to a location analysis.

This object is further achieved, in accordance with the invention, by a method for cancelling a construction site area in a central registration system for a traffic infrastructure network, in particular for a rail-bound traffic infrastructure network, wherein a supervisor cancels the construction site area within the central registration system after all safeguard assistants allocated to the corresponding construction site have requested or consented to cancelling the construction site area, wherein at least one safeguard assistant is allocated to said construction site,
characterized in
that the central registration system allows the cancelling of the construction site area only if at least one of the safeguard assistants allocated to the construction site was, at the point of time of notifying his request or consent, within a defined close-up area about the respective construction site according to a location analysis.

According to the invention, a close-up area is defined for the construction site for which a construction site area (in which no regular traffic, i.e. no non-construction traffic, is allowed for safety reasons) is to be established or cancelled in the central registration system.

The close-up area is, in general, a coherent, two-dimensional geographical area section (or a plurality of such area sections), typically defined by borderlines or intervals of geographical coordinates. When the construction site area (which is typically defined as one or a plurality of track sections, but may also be defined as one or a plurality of coherent, two-dimensional geographical area sections) shall be established or cancelled by the supervisor in coordination with a safeguard assistant on location, the request or consent of the safeguard assistant is only valid if the safeguard assistant is, when expressing himself, within the close-up area of the construction site of the construction site area the supervisor wants to change status of (i.e. establish or cancel). By this means it is made sure that the supervisor does not confuse the construction site area to be status-changed with a construction site area far away from the safeguard assistant. This effectively prevents traffic accidents due to wrong selection of the construction site area to be status-changed. Note that in case of several safeguard assistants allocated to a construction site, it is generally sufficient that one safeguard assistant requesting or consenting to a cancelling is within the defined close-up range in order to avoid a wrong selection of the supervisor; however, all allocated safeguard assistants should have agreed with the cancelling to guarantee free tracks.

Further, the safeguard assistant is forced to be near the construction site for which he seeks a status change. Thus an unnecessary early establishing of a construction site area (namely when the safeguard assistant and typically his construction worker team, too, have not yet arrived at the location) is avoided. Even more important, when requesting or consenting to a cancelling of the construction site area, the safeguard assistant is generally in a position near enough to have visually checked the construction site immediately before, so blocked tracks (e.g. by lost or forgotten tools) are likely to be identified before regular traffic approaches.

It should be noted that the location analysis itself has no responsibility for the security, since the establishing and cancelling of the construction site areas is effected by the users (i.e. the supervisor, in cooperation with the safeguard assistant/s). In accordance with the invention, the positions of the safeguard assistants, typically grouped for safeguard assistants at the same close-up area, are displayed at a workstation/user interface of the supervisor to facilitate the coordination of (and keeping an overview over) the safeguard assistants and construction worker by the supervisor. This, along with the inventive methods, supports and unburdens the supervisor significantly, in particular if numerous construction worker teams work in parallel (in order to keep track blocking short).

In accordance with the invention, safeguard assistants are typically flagmen and/or construction workers and/or head-workers and/or traction unit drivers. A request or a consent or an invitation to declare consent is typically indicated by dedicated data signals, exchanged via the central registration system and portable communication devices of the safeguard assistants (instead of voice communication). In accordance with the invention, the location of a safeguard assistant is typically technically determined via the location of a technical device (e.g. the portable communication device) carried by him. A request or consent or invitation to declare consent is preferably initiated manually in accordance with the invention. However, in some cases, automatic initiation may be useful, so the initiation is not forgotten, in particular by the safeguard assistants. For example, entering of the defined close-up area by a safeguard assistant, as identified e.g. by GPS, may automatically initiate a request to establish the corresponding (associated) construction site area. In rare cases it may be useful that when a safeguard assistant leaves a defined close-up area (or more exactly, reaches an outer part or the edge of the defined close-up area), as identified e.g. by GPS, a request for or consent to cancelling the corresponding (associated) construction site area is initiated automatically; however, the safeguard assistant has to be highly aware of the consequences of his position change then (in particular if team members at the construction site are not location-monitored safeguard assistants, and/or if tools or equipment block the tracks at least temporarily).

Note that in addition to establishing or cancelling procedures of construction site areas in the central registration system involving local safeguard assistants as described above, there may be alternative procedures for blocking and unblocking of track sections in the central registration system involving no local safeguard assistants at all (in particular emergency procedures of a traffic controller). The central registration system may be part of the railway control center, or may be a system independent from the railway control center (what is particularly useful when the railway control center is offline due to the construction work). The central registration system may be of advanced type or of auxiliary type, or even a mixed type. In particular, the central registration system may be of ETCS type.

### Preferred variants of the invention

In a preferred variant of the inventive methods, for the location analysis, geographical coordinates of the safeguard assistant at the point of time of notifying his request or consent are technically determined, and the geographical coordinates are compared with the definition of the close-up area, in particular by the central registration system. Location analysis by geographical coordinates is particularly simple, and freely defined close-up areas may be compared with the geographical coordinates. Typically, the definition of the close-up area is programmed at the central registration system, so the comparison is done there most simply (note that the safeguard assistants may be informed by a location indication signal whether they are currently in the close-up range or not). Note that alternatively, for example a close range detector may be positioned at the construction site which detects whether a safeguard assistant (or his portable communication device, respectively) is within a limited detection range; in this case said detection range defines the close-up area.

In a preferred further development of the above variant, the geographical coordinates of the safeguard assistant are determined with the support of satellites, in particular with GPS (=global positioning system). Satellite based location analysis is particularly simple and applicable for all outdoor construction sites. Note that in case of unavailable satellite based location analysis, the safeguard assistant may manually notify his position regularly (such as every five minutes, possibly after a reminder), including at least the information whether he is still within the defined close-up area or not.

Further preferred is a variant of the inventive methods wherein the central registration system indicates the establishing or cancelling of a construction site area to all safeguard assistants allocated to the corresponding construction site immediately and automatically. For this purpose, typically a status signal is continuously transmitted to the safeguard assistants. The safeguard assistants thus know whether it is currently safe to approach the tracks belonging to the construction site area or not.

In an advantageous variant, the close-up area extends less than 200 meters away from the corresponding construction site area, preferably less than 100 meters. These ranges have been proven in practice. By choosing the close-up area relatively small, overlapping of close-up areas of neighbouring construction sites is avoided.

Particularly preferred is a variant wherein the defined close-up area excludes the corresponding construction site area. Thus the safeguard assistant is imperatively outside the endangered construction site area when notifying his request or consent.

Further preferred is a variant wherein the defined close-up area completely surrounds the corresponding construction site area. In this case, the safeguard assistant does not need to know the exact extension of the close-up area; he may approach to or retreat from the construction site area from/in any direction when notifying his request or consent. Automatic initiation of requests or consent messages is particularly reliable then.

In a highly advantageous variant, close-up areas of different construction sites administrated within the central registration system do not overlap. In this way, a safeguard assistant may not be within two close-up areas at the same time, and a wrong selection of a construction site area to be established or cancelled by the supervisor is reliably excluded. Preferably, the different close-up areas are programmed within the central registration system and at the programming automatically checked for overlaps, with alarm messages or program blocks in case of an overlap detection.

A preferred variant of the inventive method for cancelling a construction site provides that the central registration system allows the cancelling of the construction site area only if all safeguard assistants allocated to the construction site were, at the point of time of their respective notifying the request or consent, within the defined close-up area about the respective construction site according to a location analysis. Thus all the safeguard assistant were presumably in a position near enough to have visually checked the construction site (or the part they are responsible of) immediately before their notification, so blocked tracks (e.g. by lost or forgotten tools) are likely to be identified before regular traffic approaches.

Another variant of the inventive method for cancelling a construction site is characterized in that the central registration system allows the cancelling of the construction site area only if all safeguard assistants allocated to the construction site were, at the point of time of their respective notifying the request or consent, outside the corresponding construction site area according to a location analysis. This avoids accidents, e.g. if a safeguard assistant falls and remains unconscious immediately after his notification.

Also within the scope of the present invention is a construction site surveillance system,
in particular designed for performing an inventive method as described above, comprising
- a central registration system, in which construction site areas in a traffic infrastructure network may be established and cancelled,
- at least one portable communication device for a safeguard assistant,
- and means for determining the geographical coordinates of the communication device,
   wherein the central registration system is designed for
- transmitting an invitation signal, which invites to indicate consent to establishing of a construction site area, to the communication device,
- transmitting a status signal, which indicates whether a construction site area is established or not, to the communication device,
   wherein the communication device is designed for
- transmitting a request signal or a consent signal for establishing a construction site area to the central registration system,
- transmitting a request signal or a consent signal for cancelling a construction site area to the central registration system,
- and indicating a received status signal.

By means of this surveillance system, the safety at construction sites, in particular in rail-based traffic infrastructure networks, may be increased. The surveillance system (and therein typically the central registration system) is designed such that the current geographical coordinates of a communication device from which a request or consent signal is received are compared to programmed close-up areas of construction sites. If the geographical coordinates may be attributed to a close-up area or a corresponding construction site area, respectively, then a supervisor may change the status of (i.e. establish or cancel) this construction site area in the central registration system accordingly (note that the status change may be done automatically once the supervisor requested consent, in accordance with the invention). Other construction site areas cannot be changes status of upon the request or consent signal of said communication device at these geographical coordinates. Thus the wrong selection of construction site areas is avoided.

In an advantageous embodiment of the inventive surveillance system, the communication device is designed for transmitting its present geographical coordinates to the central registration system,
in particular wherein the communication device comprises a GPS receiver for determining its geographical coordinates. At the communication device, the geographical coordinates are particularly simple to determine. GPS is a technology proven in practice and well suited for this purpose.

In another embodiment, the central registration system comprises an attachment for determining the geographical coordinates of the communication device,
in particular wherein the attachment comprises at least two, preferably at least three direction finders. With the attachment, the central registration system may determine the geographical coordinates independently, for example by means of triangular bearing.

Further preferred is an embodiment wherein the communication device is designed for regularly transmitting ready signals, indicating its operational availability, to the central registration system. So broken down communication devices are quickly identified and may be replaced promptly; automatic initiation of notifications (if applied) becomes more reliable.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a schematic view of a traffic infrastructure network, comprising two construction sites protected by the inventive methods;
- Fig. 2: shows a schematic view of an inventive construction site surveillance system;
- Fig. 3: shows a schematic view of a supervisor's user interface at a central registration system at which the inventive methods are applied;
- Fig. 4: shows a schematic flow diagram of the inventive methods.

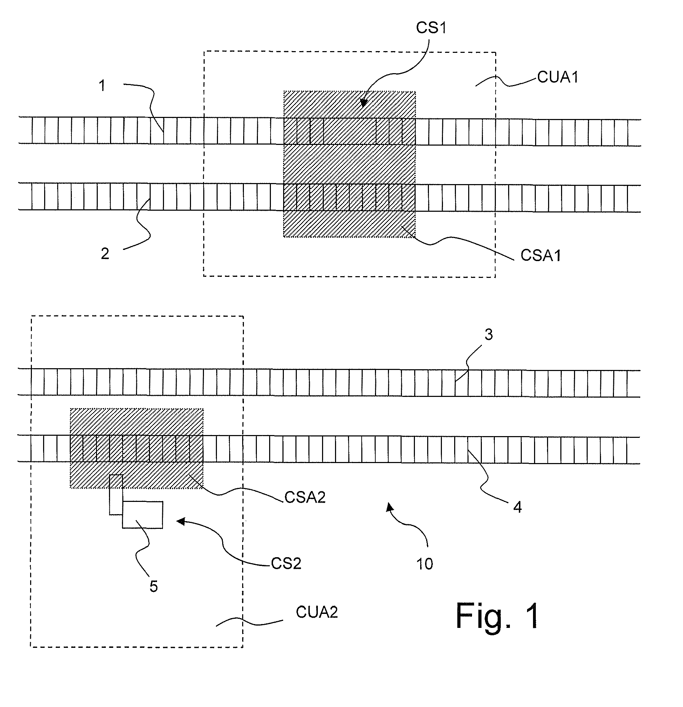

**Fig. 1** shows a map of a part of a traffic infrastructure network 10, comprising several tracks 1, 2, 3, 4. In track 1, some railroad ties are loose, so a first construction site CS1 is planned in order to fix the ties. At track 4, a signaling installation 5 has a malfunction, so a second construction site CS2 is planned there.

When construction workers work at construction site CS1, a section of track 1 has to be blocked from regular traffic, since workers will have to walk and work on this track section. Further, the neighboring track 2 will also have to be blocked in a nearby section, since draught caused by trains using track 2 might affect the workers. So within a first construction site area CSA1, marked with a hatching, the regular traffic will have to be blocked during the construction work.

In a corresponding way, a second construction site area CSA2 will have to be blocked for performing the work at the second construction site CS2, corresponding to a section of track 4. Note that here no blocking of the neighboring track 3 is necessary, since the signaling installation 5 is far enough from track 3.

For the first construction site CS1, a first close-up area CUA1 has been defined, which completely encloses the first construction site area CSA1 here. Safeguard assistants within the first close-up area CUA1 may request (or consent to) establishing or cancelling the first construction site area CSA1. If a safeguard assistant is outside the first close-up area CUA1, his request for establishing or cancelling the first construction site area CSA1 will principally be ignored (however, if there are several allocated safeguard assistants requesting cancelling the first construction site area CSA1, it may be enough that only one of them is within the first close-up area CUA1). The location of each safeguard assistant is continuously checked by GPS, and his location at the time of his request (or consent) notification is compared with the defined coordinates of the first close-up area CUA1. Note that here the first close-up area CUA1 is approximately rectangular, with its sides oriented in parallel to north-south and east-west direction, making the definition of the first close-up area CUA1 (and the comparison) particularly simple.

For the second construction site CS2, there is defined a second close-up area CUA2. A safeguard assistant within the second close-up area CUA2 may request (or consent to) establishing or cancelling the second construction site area CSA2, else his request (or consent) will principally be ignored (compare above).

Note that the first and second close-up areas CUA1, CUA2 do not overlap, so a request (or consent) notification of a safeguard assistant may never be valid for more than one construction site area CSA1, CSA2.

Although the invention is illustrated here with a rail-based traffic infrastructure network, the person skilled in the art will immediately notice that the invention can also be applied to other types of traffic infrastructure networks, such as ship traffic in channels and rivers, for example.

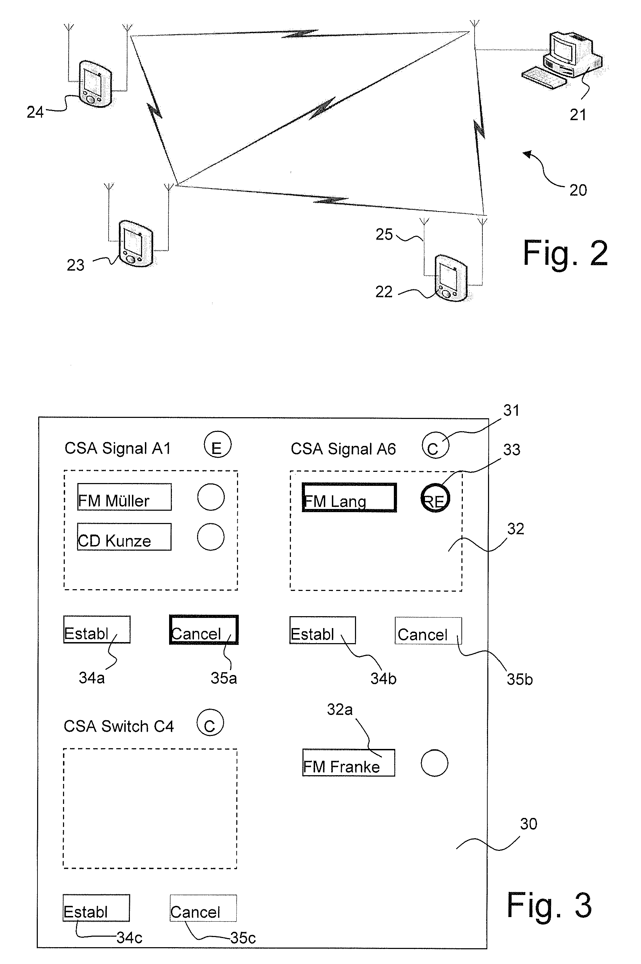

**Fig. 2** illustrates an inventive construction site surveillance system 20. It comprises a central registration system 21, where a supervisor (e.g. the traffic controller) may establish or cancel construction site areas or other tracks blockings. The central registration system 21 comprises a radio transceiver, with which the central registration system 21 may contact (here) three portable communication devices 22, 23, 24. Each portable communication device 22-24 is carried by a safeguard assistant. For example, the safeguard assistants are here two flagmen and a driver of a construction site vehicle (e.g. a crane unit). The portable communication devices 22-24 each comprise a GPS receiver (compare GPS antennas 25) which continuously determines the location of the device, and the determined location is continuously reported via radio transmission to at least the central registration system 21. In the illustrated example, the location of each device 22-24 is reported to all other devices 22-24, too, e.g. by using a multiple access protocol for collision detection, and the locations of all devices 22-24 are displayed at each device 22-24. The names of the device owners are typically encoded together with the GPS data for this purpose. It should be noted that the portable communication devices 22-24 may be smartphones with a suitable programming ("app").

**Fig. 3** illustrates the user interface 30 of a central registration system working with the inventive methods.

At the user interface 30, here three construction site areas CSA are administered, namely CSA Signal A1, CSA Signal A6 and CSA Switch C4. For each construction site area CSA, there is a status indicator 31 next to the name of the CSA. The status may be "E" (established), meaning that the construction site area is currently blocked from regular traffic, or the status may be "C" (cancelled), meaning that the construction site area CSA is not blocked. Currently, only CSA Signal A1 is established. Typically, the status of a construction site area CSA is transmitted to all safeguard assistants allocated to (scheduled for) the associated construction site, no matter whether a particular safeguard assistant is currently within the associated defined close-up area or not; note that the central registration system should have access to a duty roster for this purpose (not shown in Fig. 2).

For each construction site area CSA, a team display 32 surrounded by a dashed line shows the safeguard assistants who are currently within the close-up area of the respective construction site. In the example shown, there are flagman Müller and conductor Kunze at CSA Signal A1, and there is flagman Lang at CSA Signal A6. At CSA Switch C4, there is currently no safeguard assistant. Further, flagman Franke has been located, but outside of any of the close-up areas, therefore he is displayed on a separate list 32a. For each safeguard assistant, there is a status indicator 33. Flagman Lang has requested establishing of CSA Signal A1, indicated by "RE". His name and status indicator are highlighted in order to direct the supervisor's attention to this request. The other safeguard assistants have not notified any requests yet. For each construction site area CSA, the supervisor may propose the establishing or cancelling of the CSA with buttons 34a-c, 35a-c. For example, at CSA Signal A6, the supervisor may now initiate the establishing of the CSA by pressing button 34b. Since a request for establishing by a safeguard assistant within the corresponding close-up area is already present, the establishing will be effective immediately. Note that for security reasons, a safeguard assistant's request or consent may become invalid after e.g. five minutes without a supervisor's reaction.

As another example, the supervisor has just pressed the button 35a in order to propose the cancelling of CSA Signal A1. To indicate this, button 35a is highlighted. However, since flagman Müller and conductor Kunze have not yet notified their consent, the status of CSA Signal A1 stays at "E" (established). As soon as both of said safeguard assistants have notified their consent, the status of CSA Signal A1 will change to "C" (cancelled). Typically, when the supervisor proposes the cancellation, this is notified to the safeguard assistants by a dedicated signal, so they may answer promptly. For security reasons, the proposal of the supervisor may become invalid if within e.g. five minutes from his proposal, the safeguard assistants have not notified their consent; alternatively, the supervisor may be required to confirm the cancellation once all necessary consent messages of the safeguard assistants have been received.

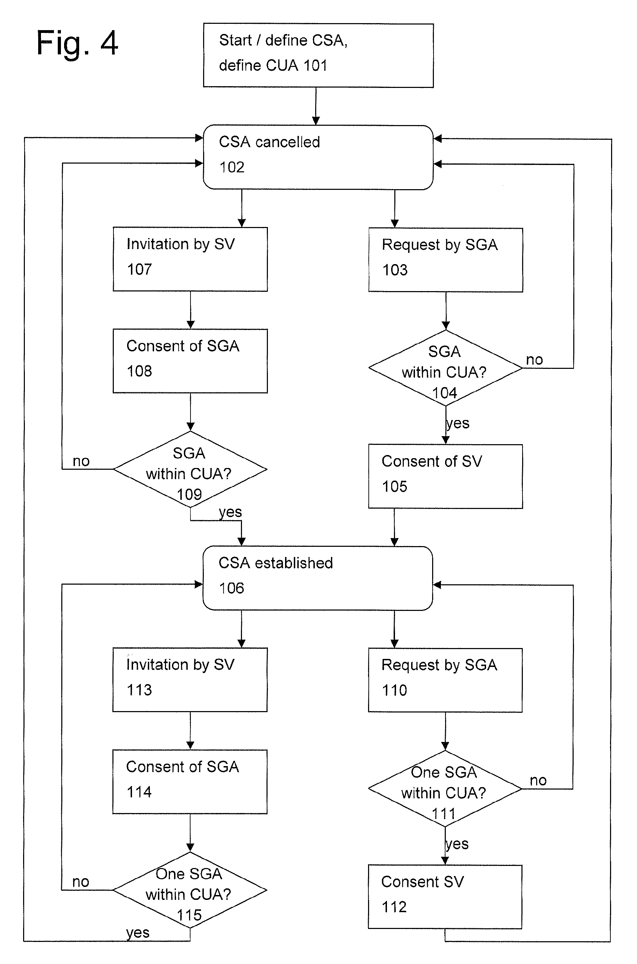

**Fig. 4** illustrates the inventive methods for establishing and cancelling of construction site areas within a central registration system by way of a flow diagram.

Upon Start 101 of the central registration system, it is assumed that at least one construction site has been prepared by programming a definition of an associated construction site area CSA (at least by defining one or a plurality of track sections to be blocked, or by defining geographical coordinates from which the affected track sections may be derived) and a definition of an associated close-up area CUA (typically by defining geographical coordinates).

After the system start 101, the construction site area CSA is in the "cancelled" state 102, meaning that currently regular traffic may still trespass the construction site area CSA.

A safeguard assistant SGA may now request the establishing of the CSA 103 by pressing the request button at his portable communication device. When the central registration system receives this request, it is checked 104 whether the safeguard assistant SGA was, at the time of his request, within the defined close-up area CUA of the construction site area CSA he requests the status change for. If no, then his request is, as far as the status of the CSA is concerned, ignored, and the CSA stays cancelled 102 (note that the supervisor at the central registration system may get an information message, though, pointing out that the request was invalid due to the SGA not being at the correct place). If yes, then the request is displayed at a workstation of a supervisor SV at the central registration system, and the supervisor SV may now consent 105 to the establishing of the CSA. The CSA is then established 106 within the central registration system, meaning that regular traffic may no more trespass the construction site area CSA.

Alternatively, the supervisor SV may invite 107 the safeguard assistant to consent to establishing the construction site area CSA. The safeguard assistant SGA may then consent 108 to the construction site area. However, the central registration system then checks 109 whether the safeguard assistant SGA was, at the time of his consent notification 108, within the defined close-up area CUA of the associated construction site. If no, then the consent of the safeguard assistant is, as far as the status of the CSA is concerned, ignored, and the CSA stays cancelled 102 (note that the supervisor at the central registration system may get an information message, though, pointing out that the consent was invalid due to the SGA not being at the correct place). If yes, then the construction site area CSA is established 106. Note that between steps 109 and 106, for security reasons, an additional confirmation of the supervisor (similar to step 105) may be required (however this is not obligatory, in accordance with the invention).

When the work at the construction site has been finished, the safeguard assistant SGA requests (and if there are more than one safeguard assistants allocated to the construction site, all these safeguard assistants request) the cancelling 110 of the construction site area CSA. Then the central registration system checks 111 whether at least one of the requesting safeguard assistants was, at the time of his request, within the defined close-up area CUA of the construction site he is allocated to (alternatively, it may be checked here whether all safeguard assistants were, the time of their requests, within the defined close-up area). If no, then the request 110 is, as far as the status of the CSA is concerned, ignored, and the CSA stays established 106 (note that the supervisor at the central registration system may get an information message, though, pointing out that the request was invalid due to the SGA not being at the correct place). If yes, then the request is displayed at a workstation of the supervisor SV at the central registration system, and the supervisor SV may now consent 112 to the cancelling of the construction site area CSA. The CSA is then cancelled 102 within the central registration system again, meaning that regular traffic may trespass the construction site area CSA then.

Alternatively, the supervisor SV may invite 113 all (at least one) safeguard assistants SGA allocated to the construction site to consent to cancelling the construction site area CSA. The safeguard assistants SGA may then consent 114 to the cancellation of the construction site area CSA. However, the central registration system then checks 115 whether at least one of these safeguard assistants SGA was, at the time of his consent notification 114, within the defined close-up area CUA of the construction site (alternatively, the central registration system may check whether all of the safeguard assistants allocated were, at the time of their respective consent, within the defined close-up area CUA). If no, then the consent 114 of the safeguard assistants is, as far as the status of the CSA is concerned, ignored, and the construction site area CSA stays established 106 (note that the supervisor at the central registration system may get an information message, though, pointing out that the consent 114 was invalid due to the SGAs not being at the correct place). If yes, then the construction site area CSA is cancelled 102. Note that between steps 115 and 102, for security reasons, an additional confirmation of the supervisor (similar to step 112) may be required (however this is not obligatory, in accordance with the invention).

## Claims

1. A method for establishing a construction site area (CSA; CSA1, CSA2) in a central registration system (21) for a traffic infrastructure network (10), in particular for a rail-bound traffic infrastructure network (10),
wherein a supervisor (SV) establishes (106) the construction site area (CSA; CSA1, CSA2) within the central registration system (21) after a safeguard assistant (SGA) has requested (103) or consented to (108) establishing the construction site area (CSA; CSA1, CSA2),
**characterized in**
**that** the central registration system (21) allows the establishing (106) of the construction site area (CSA; CSA1, CSA2) only if the safeguard assistant (SGA) was, at the point of time of notifying his request (103) or consent (108), within a defined close-up area (CUA; CUA1, CUA2) about the corresponding construction site (CS1, CS2) according to a location analysis.

2. A method for cancelling a construction site area (CSA; CSA1, CSA2) in a central registration system (21) for a traffic infrastructure network (10), in particular for a rail-bound traffic infrastructure network (10),
wherein a supervisor (SV) cancels (102) the construction site area (CSA; CSA1, CSA2) within the central registration system (21) after all safeguard assistants (SGA) allocated to the corresponding construction site (CS1, CS2) have requested (110) or consented to (114) cancelling the construction site area (CSA; CSA1, CSA2), wherein at least one safeguard assistant (SGA) is allocated to said construction site (CS1, CS2),
**characterized in**
**that** the central registration system (21) allows the cancelling (102) of the construction site area (CSA; CSA1, CSA2) only if at least one of the safeguard assistants (SGA) allocated to the construction site (CS1, CS2) was, at the point of time of notifying his request (110) or consent (114), within a defined close-up area (CUA; CUA1, CUA2) about the respective construction site (CS1, CS2) according to a location analysis.

3. Method according to claim 1 or 2, **characterized in that** for the location analysis, geographical coordinates of the safeguard assistant (SGA) at the point of time of notifying his request (103, 110) or consent (108, 114) are technically determined, and the geographical coordinates are compared with the definition of the close-up area (CUA; CUA1, CUA2), in particular by the central registration system (21).

4. Method according to claim 3, **characterized in that** the geographical coordinates of the safeguard assistant (SGA) are determined with the support of satellites, in particular with GPS (=global positioning system).

5. Method according to claim 1 or 2, **characterized in that** the central registration system (21) indicates the establishing (102) or cancelling (106) of a construction site area (CSA; CSA1, CSA2) to all safeguard assistants (SGA) allocated to the corresponding construction site (CS1, CS2) immediately and automatically.

6. Method according to claim 1 or 2, **characterized in that** the close-up area (CUA; CUA1, CUA2) extends less than 200 meters away from the corresponding construction site area (CSA; CSA1, CSA2), preferably less than 100 meters.

7. Method according to claim 1 or 2, **characterized in that** the defined close-up area (CUA; CUA1, CUA2) excludes the corresponding construction site area (CSA; CSA1, CSA2).

8. Method according to claim 1 or 2, **characterized in that** the defined close-up area (CUA; CUA1, CUA2) completely surrounds the corresponding construction site area (CSA; CSA1, CSA2).

9. Method according to claim 1 or 2, **characterized in that** close-up areas (CUA; CUA1, CUA2) of different construction sites (CS1, CS2) administrated within the central registration system (21) do not overlap.

10. Method according to claim 2, **characterized in that** the central registration system (21) allows the cancelling (102) of the construction site area (CSA; CSA1, CSA2) only if all safeguard assistants (SGA) allocated to the construction site (CS1, CS2) were, at the point of time of their respective notifying the request (110) or consent (114), within the defined close-up area (CUA; CUA1, CUA2) about the respective construction site (CS1, CS2) according to a location analysis.

11. Method according to claim 2, **characterized in that** the central registration system (21) allows the cancelling (102) of the construction site area (CSA; CSA1, CSA2) only if all safeguard assistants (SGA) allocated to the construction site (CS1, CS2) were, at the point of time of their respective notifying the request (110) or consent (114), outside the corresponding construction site area (CSA; CSA1, CSA2) according to a location analysis.

12. A construction site surveillance system (20),
in particular designed for performing a method according to one of the claims 1 or 2,
comprising
- a central registration system (21), in which construction site areas (CSA; CSA1, CSA2) in a traffic infrastructure network (10) may be established (106) and cancelled (102),
- at least one portable communication device (22-24) for a safeguard assistant (SGA),
- and means for determining the geographical coordinates of the communication device (22-24),
wherein the central registration system (21) is designed for
- transmitting an invitation signal, which invites (107) to indicate consent (108) to establishing (106) of a construction site area (CSA; CSA1, CSA2), to the communication device (22-24),
- transmitting a status signal, which indicates whether a construction site area (CSA; CSA1, CSA2) is established or not, to the communication device (22-24),
wherein the communication device (22-24) is designed for
- transmitting a request (103) signal or a consent (108) signal for establishing (106) a construction site area (CSA; CSA1, CSA2) to the central registration system (21),
- transmitting a request (110) signal or a consent (114) signal for cancelling (102) a construction site area (CSA; CSA1, CSA2) to the central registration system (21),
- and indicating a received status signal.

13. Surveillance system (20) according to claim 12, **characterized in that** the communication device (22-24) is designed for transmitting its present geographical coordinates to the central registration system (21),
in particular wherein the communication device (22-24) comprises a GPS receiver for determining its geographical coordinates.

14. Surveillance system (20) according to claim 12, **characterized in that** the central registration system (21) comprises an attachment for determining the geographical coordinates of the communication device (22-24),
in particular wherein the attachment comprises at least two, preferably at least three direction finders.

15. Surveillance system (20) according to claim 12, **characterized in that** the communication device (22-24) is designed for regularly transmitting ready signals, indicating its operational availability, to the central registration system (21).
